# EUROPEAN PATENT APPLICATION

(11) **EP 2 420 947 A1**
(43) Date of publication of application: **22.02.2012**
(21) Application number: 11176716.6
(22) Date of filing: 05.08.2011
(51) Int. Cl.: G06F 17/30

(54) **Display control apparatus, control method thereof, program, and recording medium**

(30) Priority: 16.08.2010 JP 2010181895
(71) Applicant: CANON KABUSHIKI KAISHA, Ohta-ku Tokyo 146-8501 (JP)
(72) Inventor: Sohma, Hidetomo, Ohta-ku, Tokyo (JP)
(74) Representative: Garner, Jonathan Charles Stapleton

(57) **Abstract**

In the display of a search result using a virtual space, the display and operation in the space is associated with an addition and change of search instruction to facilitate to grasp the content and to operate a narrowing search. A plurality of contents each of which having a keyword is arranged in the virtual space and displayed on a display screen. When one key is arranged, a content to be a search target is selected from among the plurality of contents based on a position at which the key is arranged, a search is performed on the selected search target with the arranged key, and an arrangement of the contents is changed and displayed based on a relationship with the key and the plurality of contents.

## Description

### BACKGROUND OF THE INVENTION

### Field of the Invention

The present invention relates to a display control apparatus capable of displaying a result of searching content such as a document and an image, a control method thereof, a program, and a recording medium.

### Description of the Related Art

Generally, when many search results are acquired by performing a search on a plurality of documents or images based on a search instruction (query) such as a keyword provided by a user, various attempts can be made on a method for presenting the results. Actually, the user searches a desired result from among such a plurality of search results. To facilitate the search, the attempts on how to display and arrange the search results can be conceived so that the user can easily search the desired result.

Further, the user may operate the display of the search results to change a display method. Particularly, when the user determines, based on the search results, that the search results include many unnecessary results or does not include a necessary result, the user can further narrow the search or change a search range by adding the search instruction. Thus, it is important to provide the display from which the user can easily recognize the search results or the display and operation which enable the user to easily change and narrow the search range.

The search results normally include values like similarity as an index that indicates how much the search result corresponds to the search instruction. A variety of methods for calculating the similarity are suggested. With respect to each of the search results, some methods deal with similarity of the contents themselves and a content rate of an image or a text as the content included in the search result and that in the search instruction, and others use popularity levels of the search results themselves.

Basically, there are values that indicate basic similarity with respect to each of the search instructions or a group of the search instructions. By tallying these values of the similarity, the similarity of each search result can be calculated generally. Further, each similarity of the search result can be used to display differences among the search results.

When a plurality of search results are displayed as described above, in addition to a method for listing one-dimensional results (the search results are often arranged according to the similarity), there is a method for arranging the search results in a multidimensional space such as a two-dimensional space and a three-dimensional space and then displaying differences among the search results by the arranging method. However, as the multidimensional space, up to the three-dimensional space can be normally recognized. If the four-dimensional space or more is used, from our general sense, it can be difficult to interpret the multidimensional space.

When the search results are arranged according to the similarity relative to the search instruction for each axis in the dimension, from the reasons described above, only about three search instructions can be expressed at most. Therefore, Japanese Patent Application Laid-Open No. 2001-134599 discusses a technique in which the search results are locally arranged by the search instruction in the multidimensional space.

Further, when many search instructions are provided, a plurality of search instructions effective in arranging the search results needs to be selected, however, it is difficult to automatically select them. For the user, it is also difficult to select candidates of the search instructions. Actually, the user performs the operations including performing the search while selecting the search instructions such as an effective keyword and adding and changing the search instructions, because the user does not understand which search instruction is effective.

To address this issue, a method is performed in which, relative distances among the search results and relationships among local directions are acquired based on the similarity between the search results in the multidimensional space without providing particular correspondence between each axis and the search instruction, and each of the search results can be appropriately arranged in the space using the acquired relative distances and relationships. Such method can change the similarity between the search results into a distance therebetween, and in this case, although a meaning of each axis is not understood, a meaning of the local distance or relationship can be easily understood.

If a state of the search results dispersed in the space can be displayed in a form that can be easily understood by the user, the method can be an effective measure. Particularly, if the meaning of a group of the search results can be understood and the group of the search results can be classified, when the group of the search results or a small portion in the group thereof is enlarged or reduced to be displayed, the search result can be searched as the user intends. However, since an operation corresponding to the classification has been difficult to perform, a method for assisting the user to search the search result has been provided based on the premise that there is no classification.

For example, Japanese Patent Application Laid-Open No. 2008-97175 discusses a method for selecting the use's desired search result from among the search results using a magnet as a metaphor for the search instruction. The method is designed on assumption of no above-described classification provided. Therefore, targets searched with the search instruction are arranged in the space to be displayed by a standard, which is different from that for the search. Further, expressions of the targets similar to and corresponding to the search instruction (e.g., brightness) are changed, so that the user performs the search based on the changed expressions.

Since the methods for analyzing and classifying the search results have been developed due to the improvement in handling the similarity in the search method, the search methods, and the techniques, the display of the search results using the multidimensional space described above can be effectively used. Further, if apparatuses capable of performing three-dimensional (3D) display can be used, it is expected that effects of the display of the search results using the multidimensional space will be further improved. For example, Japanese Patent Application Laid-Open No. 2003-173356 discusses a method in which the search results acquired by the narrowing search are simply displayed using the 3D space, and the searched results are displayed in front.

However, when displaying the search results using the multidimensional space, the conventional technique described above does not simply associate the addition and change of the search instructions with the display and operation of the search results in the space.

### SUMMARY OF THE INVENTION

The present invention is directed to a technique, when search results are displayed using a multidimensional space, for associating an addition and change of search instructions with a display and an operation of the search results in the space and performing the display that a user can easily recognize contents.

According to a first aspect of the present invention, there is provided a display control apparatus according to claims 1 to 12.

According to a second aspect of the present invention, there is provided a display control apparatus according to claim 13. According to a third aspect of the present invention, there is provided a method as specified in claim 14. According to a fourth aspect of the present invention, there is provided a method as specified in claim 15. According to a fifth aspect of the present invention, there is provided a program as specified in claim 16. Such a program can be provided by itself or carried by a carrier medium. The carrier medium may be a recording or other storage medium. The carrier medium may also be a transmission medium. The transmission medium may be a signal. According to a sixth aspect of the present invention, there is provided a storage medium as specified in claim 17.

According to the present invention, when search results are displayed using a multidimensional space, a display and operation of the search results in the space are associated with an addition and change of search instructions, so that a user can easily recognize contents.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 illustrates a hardware configuration of a display device according to an exemplary embodiment of the present invention.

Fig. 2 is a block diagram illustrating a configuration of the display device and a flow of information according to the exemplary embodiment of the present invention.

Fig. 3 is a flowchart illustrating a flow of processing according to the exemplary embodiment of the present invention.

Figs. 4A and 4B illustrate examples of search contents (a keyword list and search result candidates) according to the exemplary embodiment of the present invention.

Figs. 5A and 5B illustrate examples of results of classification and cluster processing according to the exemplary embodiment of the present invention.

Fig. 6 illustrates an example of a 3D display of search results according to the exemplary embodiment of the present invention.

Fig. 7 illustrates a display for performing a selecting operation with a magnet metaphor of a keyword in the 3D display of the search results according to the exemplary embodiment of the present invention.

Fig. 8 illustrates a display after attraction by the magnet metaphor of the keyword has started in the 3D display according to the exemplary embodiment of the present invention.

Fig. 9 illustrates a display when another magnet metaphor is continuously applied in the 3D display according to the exemplary embodiment of the present invention.

Fig. 10 illustrates a display after attraction by a magnet metaphor has started after a selecting operation has been performed in a 3D display according to a second exemplary embodiment of the present invention.

Fig. 11 is a flowchart illustrating a flow of processing according to the second exemplary embodiment of the present invention.

Fig. 12 illustrates a hardware configuration of a search device according to a third exemplary embodiment of the present invention.

Fig. 13 is a flowchart illustrating a flow of processing according to the third exemplary embodiment of the present invention.

### DESCRIPTION OF THE EMBODIMENTS

Various exemplary embodiments, features, and aspects of the invention will be described in detail below with reference to the drawings.

In the following exemplary embodiment, a searching operation and a display of a large numbers of search results of the searching operation which are performed when a document search or information search via the Internet is performed will be described as an example.

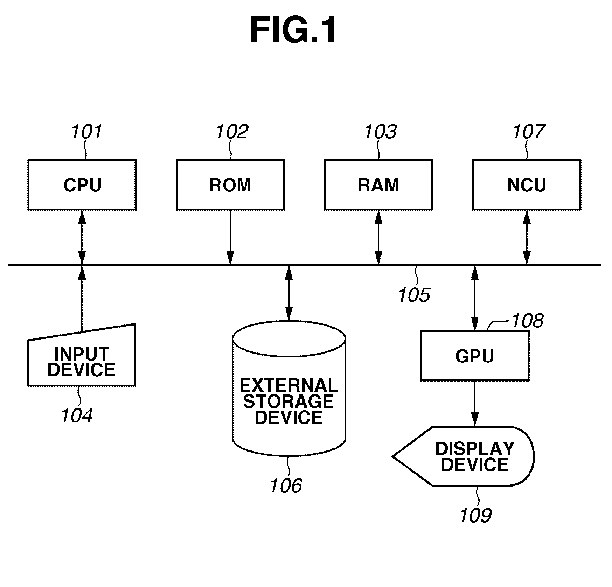

Fig. 1 illustrates a hardware configuration of a display control apparatus according to an exemplary embodiment of the present invention. A central processing unit (CPU) 101 executes various types of controls in the display control apparatus according to the present exemplary embodiment. The processing described below using a flowchart or the like is controlled by the CPU 101. Contents of an operation are instructed by a program in a read only memory (ROM) 102 or a random access memory (RAM) 103. The CPU 101 can operate a plurality of calculator programs in parallel by a function of the CPU 101 itself or a mechanism of the calculator program. The ROM 102 stores the calculator programs and data which store a control procedure to be performed by the CPU 101.

The RAM 103 stores a control program to be processed by the CPU 101 and provides a work area for various pieces of data when the CPU 101 executes various types of controls. An input device 104 includes a keyboard and a mouse which provides a user with an operating environment for various types of inputs, however. As long as the input device 104 can provide the user with the operating environment for various types of inputs, any of a touch panel, a stylus pen, and the like can be used. A bus 105 includes an address bus or a data bus and is connected to each unit in the configuration.

An external storage device 106 stores various pieces of data. The external storage device 106 may include a recording medium, such as a hard disk, a floppy disk, an optical disk, a magnetic disk, a magneto-optical disk, a magnetic tape, and a non-volatile memory card, and a drive for driving the recording medium and recording information in it. The calculator programs and data that are stored are entirely or partially called onto the RAM 103 when necessary by instructions input via the keyboard and that from various calculator programs.

A communication device network control unit (NCU) 107 is used to communicate with other computer apparatuses. The NCU 107 communicates with an apparatus located in a remote area (not illustrated) via the network (local area network (LAN) or the like), so that the programs and data pieces of the present exemplary embodiment can be shared with the remote computer apparatus. As a communication method between the computer apparatuses, wired communications including, for example, a recommended standard 232C (RS232C), a universal serial bus (USB), institute of electrical and electronic engineers (IEEE) 1394, P1284, a small computer system interface (SCSI), a modem, and Ethernet (registered trademark), and wireless communications including, for example, Bluetooth, an infrared communication, and IEEE802.11b may be used. In other words, any communication method can be used as long as it includes a communication unit communicating with a device connected to the display control apparatus according to the present invention.

A graphics processing unit (GPU) 108 performs calculation for creating an image for display contents and for acquiring a display position according to a provided display instruction and a calculation instruction via the CPU 101 and the bus 105, and then transmits the calculation result to a display device 109 so that the calculation result can be drawn.

The display device 109 includes a display and displays states of various input operations and the calculation results according to the states on the display screen to the user. According to the present invention, the display content is displayed in a three-dimensional space (hereinafter, referred to as a 3D space display). However, the display device may display a virtual 3D space in a normal plane (two-dimensional (2D) ) display or actually display the 3D space. The device that can display the 3D space (e.g., a device providing a user with an image for a right eye and an image for a left eye that include parallax) is more effective.

The recording medium such as the ROM 102 and the RAM 103 stores the calculator programs and data for realizing data management according to the present exemplary embodiment. The CPU 101 reads and executes the program code stored in the recording medium, so that the function of the apparatus can be realized. Any types of recording medium can be used.

There is a possibility that the external storage device storing a program and data relating to the present invention is provided in the system or the apparatus according to the present invention, and the program can be copied from the external recording device to the rewritable recording medium such as the RAM 103. As the external storage device 106, any of a floppy disk, a compact disk read only memory (CD-ROM) , a hard disk, a memory card, a magneto-optical disk, and the like can be used.

The data used for search processing according to the present invention may be obtained via the NCU 107 as well as from the external storage device 106. Similarly, the data created during the search processing may be stored on another device via the NCU 107 as well as on the ROM 102, the RAM 103, and the external storage device 106. The configuration described above is merely an example of the present exemplary embodiment and the present invention is not limited thereto.

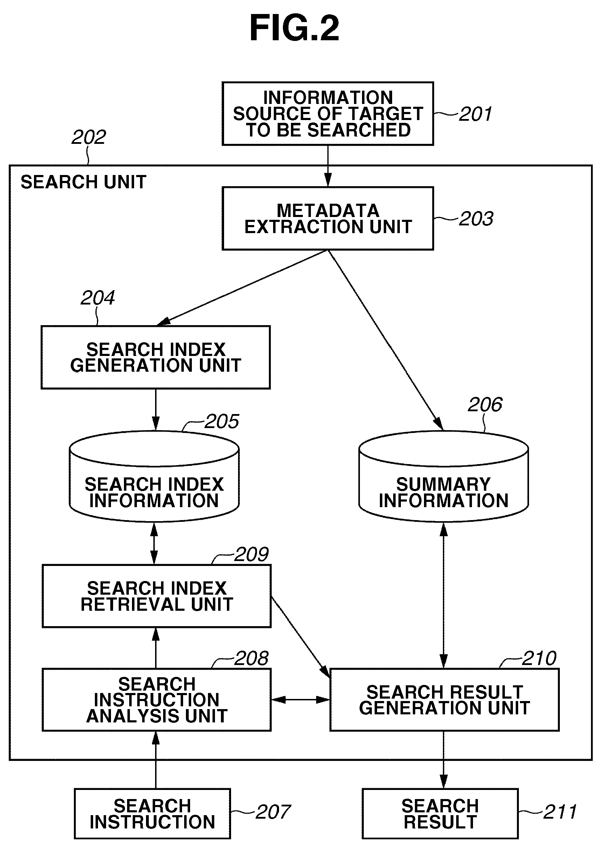

Fig. 2 is a block diagram illustrating a flow of information in basic processing of the search processing according to the present exemplary embodiment.

An information source 201 is an information source of a target, such as a document and an image, to be searched. The information source includes a content management system for managing the content such as a document and an image and a document in a hyper text makeup language (HTML) format on the Internet as with a search service of the Internet.

In general, in the case where the information source is the management system for managing the content such as a document and an image, the document included therein often includes a unit for retrieving the information of the image, and by using the unit, a search unit 202 performs operations. In the case where the information source is the Internet, a unit for retrieving usable document and information from the Internet is necessary, and thus, software or a device referred to as a crawler for efficiently retrieving the document or the information may be used.

According to the present exemplary embodiment, since any type of the information source can be used, the information sources are collectively referred to as the information source of a search target. The information source of the search target may include various configurations, such as devices, software, services using the devices and the software, communication units, and combinations thereof.

In the case of the content management system described above, the content management system is configured in the device or software which is similar to that in the search device of the present exemplary embodiment. Further, the information source may include the case where the content is stored in the external storage device 106 illustrated in Fig. 1, and the case where the external device and the service on the Internet may be used via the NCU 107. In many cases, the device and the software may seem the same for the user. In addition, a measure may be often prepared for enabling a user to use contents and information of the search results from the search device and the device and the software that use the search results.

The search unit 202 performs roughly two operations. One of the two operations is referred to as a registration operation for enabling the content and information included in the information source of the search target to be searched at a high speed. When a large amount of contents and information are searched, if the search is performed in an actual time while retrieving the content and information, it takes extremely long processing time. Thus, the information necessary for searching is extracted and processed in advance so that the search can be performed at high speed.

Another operation is a search operation, in which, based on a search instruction given by the user, the corresponding content and information are searched to be provided together with the information necessary for presenting the content and information of the search results to the user.

Hereinbelow, according to a procedure of the registration operation performed by the search unit 202, a metadata extraction unit 203, a search index generation unit 204, search index information 205, and summary information 206 will be described.

The metadata extraction unit 203 extracts information (referred to as metadata) that enables the search from the content and information included in the information source of the search target. The metadata extraction unit 203 transmits the extracted metadata to the search index generation unit 204. Further, the metadata extraction unit 203 extracts summary information about an image thumbnail and a text of a part corresponding to the search which are used when the search result is presented, and stores the summary information into the summary information 206. The summary information 206 can be used as information describing the part corresponding to the search result. The metadata is stored in the calculator program of a metadata extraction method that is previously installed in the ROM 102 and the RAM 103, and then the extraction processing is performed on the information acquired from the information source 201 of the search target using the CPU 101 and the RAM 103. Thus, the metadata extraction is realized. The metadata extraction unit 203 transmits the extracted results to the search index generation unit 204 via the RAM 103 and the external storage device 106.

The metadata extraction unit 203 includes various metadata extraction methods. For example, a metadata extraction method can perform a full-text search by extracting text information in the content and the document. Further, for example, another metadata extracting method can perform a keyword search by extracting a keyword or a key phrase from the text information. Yet another metadata extraction method can perform an image search and an object search by extracting an image feature quantities, such as a face of an object, colors, and compositions from an image in the image content and the document. As described above, there are various methods, and any of which can be applied to the present invention.

The search index generation unit 204 creates a search index so that, from the metadata acquired from the metadata extraction unit 203, the content and information corresponding to the metadata or the search corresponding part therein can be acquired at high speed. The search index generation unit 204 stores the created search index into the search index information 205. The search index is stored in the calculator program of a search index generation method that is previously installed in the ROM 102 and the RAM 103, and then the extraction processing is performed on the information acquired from the metadata extraction unit 203 using the CPU 101 and the RAM 103. Thus, the search index generation is realized. Then, the search index generation unit 204 stores the results to the search index information 205 on the external storage device 106.

An appropriate method for generating the search index is used according to the metadata, and an inverted method is widely used as a basic generation strategy. The inverted method is used to associate identification information for identifying the content and information and the search corresponding part therein with a value of the metadata of the identification information. At this point, the inverted method can acquire the identification information immediately if the value of the metadata is acquired using the metadata as a key. A purpose of the method is to improve a processing speed when performing the search operation.

Normally, to manage the content and information, the identification information about the content, information and its part of the managed target is generated. By using the identification information, an index for determining the content, information, and its part of the managed target is generated. Since the index seems to be generated in a reversed manner, the method is referred to as the inverted method, and the information thereof is referred to as an inverted file or a reversed index. As described above, the identification information for identifying the content, information, and its part is generally provided. Various types of identification information are provided, and herein, the information is collectively referred to as the identification information of the search target. Normally, various methods for generating the search index and the identification information of the search target are provided, and any of the methods can be applied to the present invention.

The search index information 205 stores the search index information. When the registration operation is performed, the search index generated by the search index generation unit 204 is stored in the external storage device 106 illustrated in Fig. 1. Further, when the search operation is performed, the search index information is provided to the search index retrieval unit 209, so that the retrieval of the search index can be performed at high speed.

The summary information storage 206 stores the summary information. When the registration operation is performed, the summary information generated by the metadata extraction unit 203 is stored in the external storage device 106 illustrated in Fig. 1. Further, when the search operation is performed, the summary information corresponding to the result searched by the search index retrieval unit 209 is provided, and then processing is performed on the result by a search result generation unit 210 to display and provide the information in a form that the user can easily understand.

According to the procedure of the search operation performed by the search unit 202, a search instruction 207, a search instruction analysis unit 208, the search index retrieval unit 209, the search result generation unit 210, and a search result 211 will be described below.

The search instruction 207 provides a keyword, an image, or the like that is a search instruction contents input by the user from the input device 104 and an input device of the external device via the NCU 107 illustrated in Fig. 1. The content of the search instruction is transmitted to the search instruction analysis unit 208 via the RAM 103 or the external storage device 106 illustrated in Fig. 1. The content of the search instruction may include a plurality of types, or different types of search instructions may be mixed with each other. Further, as a feature of the present invention, a state and a status of a user who executes the search may be included in the search instruction information. Furthermore, while a part of the search result 211 is specified, an additional search instruction can be given only to the part thereof. These functions can be also used by the search instruction analysis unit 208.

The search instruction analysis unit 208 analyses each content of the search instruction transmitted via the RAM 103 or the external storage device 106 illustrated in Fig. 1 to enable the search index retrieval unit 209 to perform the search. For example, the search instruction analysis unit 208 deals with fluctuation of description of capital letters, lower case letters, hiragana (Japanese characters), and katakana (Japanese characters) and adds synonymous words with respect to the input keyword. Further, for example, when the image search is performed, the search instruction analysis unit 208 extracts an image feature quantity from a search instruction image. For example, from a search usage state of the user and a state displayed by the display device 109 illustrated in Fig. 1, the search instruction analysis unit 208 determines the state and the status of the user who is executing the search by the search instruction 207 and the additional search instruction for the content that has been already searched and displayed (a part of the search result 211). Then, the search instruction analysis unit 208 instructs the search result generation unit 210 to generate the search result corresponding to the determination.

The information pieces described above are transmitted via the RAM 103 and the external storage device 106 illustrated in Fig. 1. These the information pieces are previously stored in the calculator program of a search instruction analysis method that has been previously installed in the ROM 102 and the RAM 103, and then the content of the search instruction 207 is analyzed and extracted using the CPU 101 and the RAM 103. Thus, the transmission of the information can be realized. The information acquired by this processing is transmitted to the search index retrieval unit 209 via the RAM 103 and the external storage device 106 illustrated in Fig. 1.

The search index retrieval unit 209 searches the content, information, and its part corresponding to a search result candidate at high speed using the search index information 205 based on the information transmitted from the search instruction analysis unit 208 via the RAM 103 and the external storage device 106 illustrated in Fig. 1. Further, not only to search the correspondence, the search index retrieval unit 209 calculates the similarity and the content rate to search the results having the high similarity and content rate as the candidate of the search result.

A plurality of search result candidates may be acquired or no search result candidate may be acquired at all. In addition to the identification information of the corresponding search target, the search index retrieval unit 209 stores values indicating how much similarity and content rate the search result candidates have with respect to each instruction information included in the search instruction 207. The values described above are collectively referred to as search result candidate information. The search result candidate information is previously stored in the calculator program (including the calculation of the similarity and the content rate) of a search index retrieving method that has been previously installed in the ROM 102 and the RAM 103.

Calculation processing of the search, similarity, and content rate in the search index information on the external storage device 106 is performed on the information from the search instruction analysis unit 208 using the CPU 101 and the RAM 103, to acquire the search target candidate information. The acquired search target candidate information is transmitted to the search result generation unit 210 via the RAM 103 and the external storage device 106 illustrated in Fig. 1.

Based on the search result candidate information transmitted via the RAM 103 and the external storage device 106 illustrated in Fig. 1 and the identification information of the search target in the search result information, the search result generation unit 210 generates the search result 211 from the summary information 206 on the external storage device 106. Here, based on the search result information, processing is performed for determining an order the search targets to be presented as the search results and a display method of the entire search results including the summary information.

As a feature of the present invention, to facilitate the user's understanding of the search results, classification and clustering of each keyword can be performed for changing a presenting method. The state and the status of the user who is executing the search by the search instruction may be included in the search instruction information. In addition, while a part of the search result 211 is specified, the additional search instruction can be issued only to the specified part.

More specifically, addition of the search instruction is previously stored in the calculator program of the search result generation method that has been previously installed in the ROM 102 and the RAM 103, and based on the search result candidate information and the information from the summary information 206, the processing is performed using the CPU 101 and the RAM 103. Then, the search result 211 is generated on the RAM 103 and the external storage device 106 illustrated in Fig. 1 to realize the processing. The search result 211 is displayed on the display device 109 using the GPU illustrated in Fig. 1, or is transmitted to the external device via the NCU 107 so as that the search result 211 can be used.

The search result 211 can be displayed on the display device 109, or transmitted to the external device via the NCU 107.

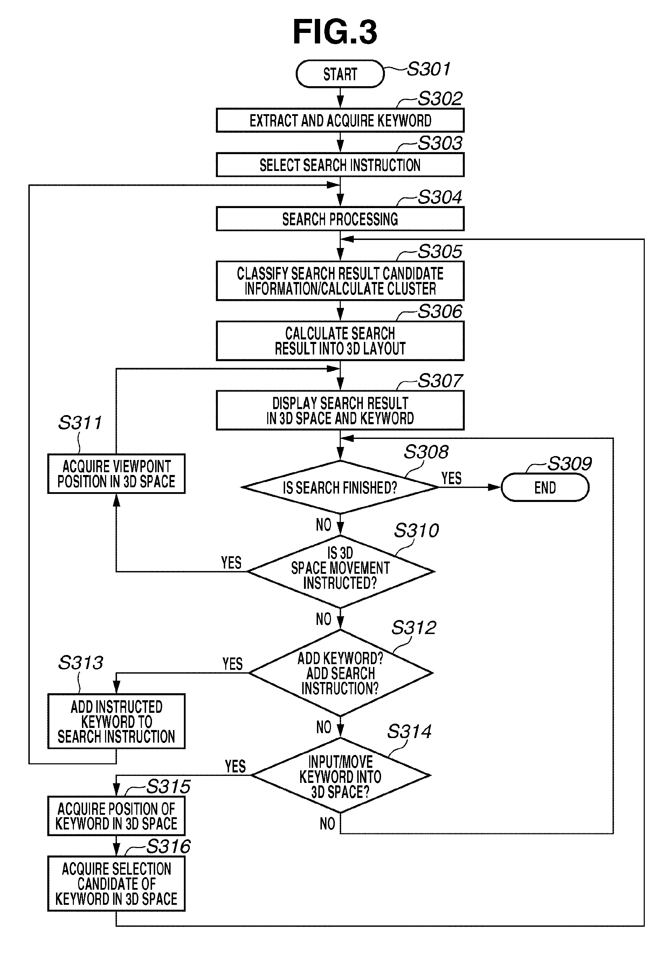

Fig. 3 illustrates a flow of processing for performing display control processing according to the present exemplary embodiment. The details of the processing illustrated in Fig. 3 will be described below.

In step S301, processing starts, and then the processing proceeds to step S302. Hereinafter, the information source of the search target is referred to as a content.

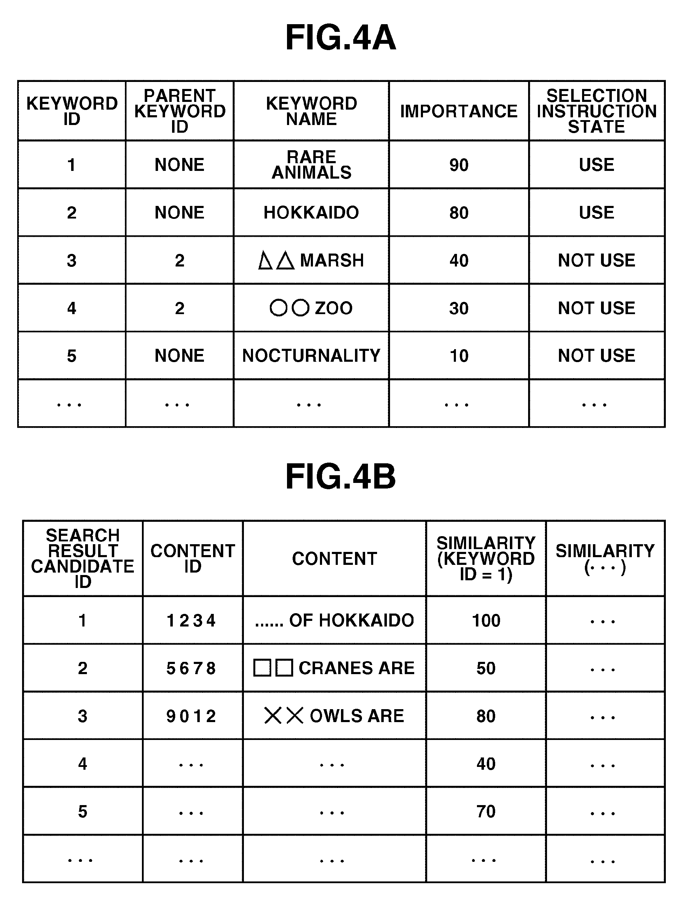

In step S302, the keyword is extracted and acquired. At the point when the search is started, if it possible, the keyword valid as the search target is extracted in advance according to an environment or a state of the user who issues the search instruction, and then the extracted keyword is added to the keyword list. Fig. 4A illustrates an example of the keyword list, which is the result of the extraction.

In the list illustrated in Fig. 4A, keyword identifications (IDs) and the keywords are in a hierarchical relation for identifying each keyword, and the hierarchical relation is indicated by a parent keyword ID. A keyword name is the same as a text presentation of the keyword. From an extraction source of each keyword, its priority is also extracted simultaneously. When the search device is started to be used, the above-described information pieces are provided as the search instruction 207 illustrated in Fig. 2 that includes a text of a description content which is being created, instruction information about the content to be described in the text, a text in a source material, and the like.

The keyword can be extracted by the search instruction analysis unit 208 using a frequency of usage of a word regarded as the keyword and general importance information about a word. The keyword can be also acquired by extracting unique expressions for extracting specific expressions. Thus, extracted words are used as the keywords. In addition, if such an extraction technique is used, the priority of the word can be also acquired simultaneously. Further, from a state that the word appears in a thesaurus or in a text, the hierarchical relation between the words can be acquired. When the processing in step S302 ends, the processing proceeds to step S303.

In step S303, the search instruction is selected. In this processing, the keyword to be used as the search instruction is selected with respect to the keyword list acquired in step S302. Based on values of the keywords in the table illustrated in Fig. 4A, the keywords having a predetermined value or more are determined to be used as selection instructions. The result of the selection is indicated as a selection instruction state in the table illustrated in Fig. 4A. This processing is performed by the search instruction analysis unit 208 illustrated in Fig. 2. When the processing in step S303 ends, the processing proceeds to step S304.

In step S304, the keyword determined to be used in step S303 is transmitted to the search index retrieval unit 209 illustrated in Fig. 2 as a search instruction word to perform the search processing. According to an example of the table illustrated in Fig. 4A, "rare animals" and "Hokkaido (one of the prefectures in Japan)" are used as the search instruction words. The content including an expression similar to or the same as "rare animals" and "Hokkaido" is searched and the content including information about the rare animals observed in Hokkaido appears as the search result candidate.

At the same time, the similarity of the keyword not used as the search instruction word is also calculated. Fig. 4B illustrates the search result candidate information which is the result of the calculation. In this table, each search result candidate includes a search result candidate ID for identifying the search result candidate and a content ID for identifying the corresponding content or a part thereof. The content of the search result candidate is described as information about a part corresponding to the search instruction word with which the search result candidate is specified. In the part of this content, a summary information ID for identifying each summary information in the summary information 206 illustrated in Fig. 2 may be described to indicate the content indirectly. Each search result candidate has the similarity relative to each keyword in the keyword list. When the processing in step S304 ends, the processing proceeds to step S305.

In step S305, based on the search result candidate information in step S304, the search result generation unit 210 illustrated in Fig. 2 performs the calculation for classifying each search result or dividing each search result candidate into cluster. The calculation can be performed using various calculation methods, and in the present exemplary embodiment, clustering is performed using K-means which is a famous clustering algorithm and a thesaurus. Here, as a distance between the search results, the search result that includes many clusters indicating a tendency of high similarity with respect to the search result candidate is finally selected. When comparable values and distances can be defined as metadata, the K-means is used.

For example, the K-means can be applied to the metadata including a shooting (creating) date and time, and a shooting location, using the difference of the metadata pieces as the distance. For a position of a creator, for example, the K-means can be applied, based on a (tree) structure of a workplace organization, using a moving distance in the (tree) structure between positions as a distance. Since (tree) structures can be acquired in names of things and living creatures using the thesaurus, the K-mean is also applied. Then, the K-mean is further applied to centers of the acquired clusters, and when the data is collected, a hierarchy thereof is formed. Such method is often used in simple hierarchical clustering.

As with types of animals, if a systematic structure, which is a system information of animals, is available, the structure may be used as one of ontology. Here, the purpose is to classify the large number of the search result candidates to display in a form that can be can easily understood by the user. Thus, when many classified groups are acquired, it is desirable that the further hierarchical classification can be performed. As long as the classification and clustering can be performed, any of the methods can be applied to the present invention. If the user can easily understand the results of the classification and clustering, effects of the present invention will be further improved.

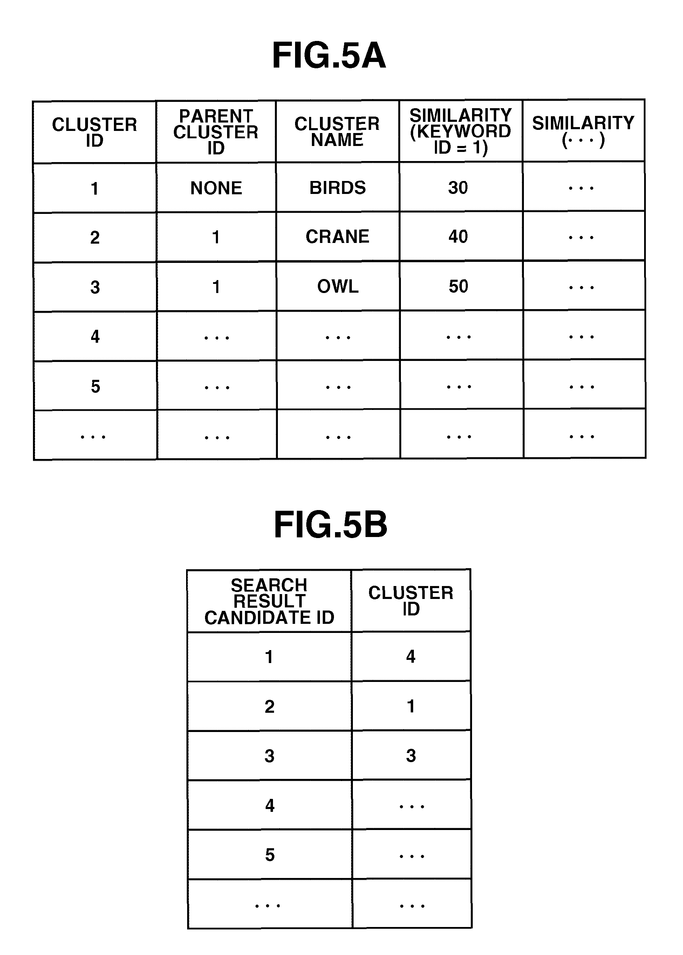

In this example, many are acquired from some types of animals of "cranes" and some types of animals of "owls" as rare animals in Hokkaido, and it can be understood that both belong the same "birds" from the thesaurus. Based on the result, the processing for associating the classification with the cluster of each search result is performed. Fig. 5A illustrates an example of cluster information which is the result of the classification and cluster calculation. Each cluster has a cluster ID for identification and acquires a cluster name from the system information of the corresponding animal. The hierarchical relation of the cluster is indicated using a parent cluster ID.

Actually, among "birds", "cranes", and "owls", there are some classifications and diversions of the system, however, generally, the thesaurus does not include detailed information, and the hierarchy is formed using the acquired information. As described above, this part includes two hierarchies. Alternatively, when no corresponding search result candidate is acquired or very few of them are acquired, the hierarchy may be omitted. Fig. 5B illustrates an example of a correspondence table that indicates which search result candidate belongs to which cluster. In this example, the corresponding relationship between the search result candidate ID and the cluster ID is illustrated. Since the search result candidate does not always belong to a specific cluster, some search result candidates have no cluster ID values. When the processing in step S305 ends, the processing proceeds to step S306.

In step S306, in order to arrange each cluster acquired in step S305, each search result candidate, and the search results in the virtual 3D space, arrangement positions thereof are calculated. The calculation is performed by the search result generation unit 210 illustrated in Fig. 2. In a 3D search result space, it is easier as the calculation method to determine the arrangement position with the similarity centering on each keyword when each cluster and each search result candidate are arranged with respect to each axis (normally, X, Y, and Z axes) constituting the 3D space. However, when, especially a large number of the keywords are acquired, the arranged result may be difficult to understand. To address such issue, based on the similarity of the search result candidates and the clusters, the search result candidates and the clusters are often arranged such that the similar search result candidates and the clusters are arranged closer to each other in the 3D search result space.

According to the present exemplary embodiment, based on the idea that each cluster acquired in step S305 can appropriately and collectively display the large number of the search result candidates, the arrangement positions are determined such that the clusters to be primary parents can be overviewed from each other and do not overlap with each other. At this point, the arrangement is calculated such that the search result candidates including the same keyword having the high similarity are positioned close to each other.

First, a method for determining an arrangement of each search result candidate in each cluster will be described. Actually, an outer shape of the cluster is displayed in a space, or the search result candidates in the cluster and other search result candidates are arranged with a distance in a space to be able to easily understand that each search result candidate in the cluster is included in the cluster. The cluster is merely formed of the search result candidates. In order to easily understand what search result candidates are included, according to the present exemplary embodiment, thumbnail images of the search result candidates are individually displayed and arranged in the cluster. A method for expressing the search results candidate as described above is basically performed by determining a relative position of each search result with respect to a center of the cluster having a sphere outer shape.

The easiest method is to determine the distance of each search result candidate from the center of the cluster by similarity acquired by comparing the cluster name with the keyword that is the metadata of each search result candidate. There are various methods for comparing the cluster name and the keyword in the metadata. For example, a method for using a correspondence level of a character string, a method for using similarity acquired by using a thesaurus or a dictionary of synonyms, and a method for using word meaning similarity of semantic vectors are known. This calculation only acquires the distance from the center of the cluster to each search result candidate, and thus does not determine the position thereof in the cluster. Therefore, normally, according to each axis forming the 3D and its direction, positional relationships among the search result candidates are relatively arranged.

In order not to significantly use each axis and its direction and in order to hierarchically construct the cluster, the different method may be used. In other words, the relative distances among the search result candidates are acquired using the method for similarly calculating the relative position of each search result candidate from the above-described distance from the center of the cluster and the similarity between the keywords of the search result candidates. From both results, the optimum position of each search result candidate can be determined.

Actually, when the search result candidates are arranged according to the relative distances among the search result candidates, they are not always arranged to fully satisfy the relative distances. Thus, within a range where the relationships in size among the relative distances do not change, the relative distance is appropriately weighed. The weight is to be ascending, and an evaluation value that is preferably "1" (preferably close to the original relative distance) is provided to perform the calculation. The evaluation value can be realized by the sum of all weights.

In the present exemplary embodiment, the arrangement different from that described above is attempted. Since the thumbnail of the search result candidate arranged near the center of the sphere cannot be clearly viewed inside the sphere of the cluster, from the number of the search result candidates in the cluster, a relative radius of the sphere of the cluster is determined so that the radius is made larger as the number of the search result candidates in the cluster is larger. Next, the thumbnail of the search result candidate is arranged on a surface of the cluster sphere. For the arrangement, the surface of the sphere is evenly divided by the number of the search result candidates to be arranged and the arrangement positions thereof are determined. The search result candidates are arranged from those having the higher similarity in the cluster name. At this point, similar to the above-described method, as the similarity between the search result candidates, the content rate of the same metadata is used so that the search result candidates having the same metadata are arranged close to each other. Further, since the hierarchical cluster is used, a lower class cluster is included. In that case, the cluster name of the lower class cluster is used as the keyword to arrange the search result candidates similarly to other search results.

As described above, the arrangement of each cluster is determined. In each cluster, the calculation is performed using relative coordinates for which the center of the cluster is defined as the reference. The calculation of the relative coordinates is performed in combination with each other according to the cluster hierarchical structure, and then the final and absolute coordinate values can be acquired.

When one top class cluster is acquired, the top class cluster can be arranged on the surface of the sphere. However, if the number of the clusters or the number of the search result candidates in the top cluster is small, they may be more conveniently used by being arranged in a line or in a circle, in some cases. Thus, according to the number of the search result candidates or similarity between the clusters, changing the method for displaying the top class clusters is effective.

As long as the calculation method can realize the display and the operation of the present invention, any calculation method can be applied to the present invention.

Further, when the keyword is arranged in the 3D search space, the display position is calculated by taking that into consideration. When the processing in step S306 ends, the processing proceeds to step S307.

In step S307, display control is performed for displaying the search results in the 3D space and the keywords on the display device 109. More specifically, based on the contents acquired in steps S304 to S306, the display control is performed to actually display the contents in the 3D search result space. The display control is performed by the search result generation unit 210 illustrated in Fig. 2. When the display is performed, the search result 211 illustrated in Fig. 2 is generated with using a function of the GPU 108 illustrated in Fig. 1.

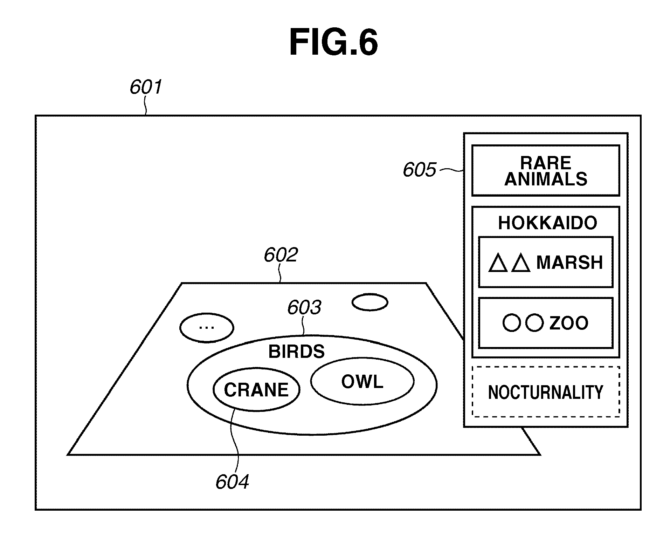

Fig. 6 illustrates an example in which the above-described display is performed. In order to simplify the display, only an ellipse is illustrated for each cluster. However, actually the ellipse has a 3D sphere shape and thumbnails are arranged therein. Here, inside the sphere of the "birds" cluster, the spheres of "cranes" and "owls" are displayed. The respective spheres have the center the same distance away from the center of the "birds" sphere. In each cluster, the thumbnail having the highest similarity to the keywords indicated by the cluster is arranged to be displayed in the most front.

A 3D search result space 601 illustrated in Fig. 6 is actually displayed and includes a floor 602 indicating a bottom of the space, a "birds" cluster 603, and a "cranes" sub-cluster 604 included in the "birds" cluster. These clusters and sub-clusters are calculated in step S305, and the arrangement positions are calculated in step S306. The details of the arrangement and the display are described below.

A list 605 includes the keywords which are acquired in steps S303 and S304 or acquired by modifying them. In this example, the hierarchical relations among the keywords are displayed by inclusion relationships of regions indicated with a frame border of each keyword. The frame border of dotted line indicates the keyword that is not used as the search word. As described above, the display in the 3D space can be realized. When the keyword is arranged in the 3D search space, the keyword is displayed corresponding thereto which is described below. When the processing in step S307 ends, the processing proceeds to step S308. Fig. 6 and following drawings include a plurality of figures illustrating the display results, and some seem to be planar in a two dimension (2D). However, basically, the objects arranged in the drawings are displayed in the 3D.

In step S308, it is determined whether the user issues an instruction to end the search. The search result generation unit 210 illustrated in Fig. 2 performs the determination. When the user has issued the instruction to end the search by an operation via the input device 104 illustrated in Fig. 1 (YES in step 308), the processing proceeds to step S309 and ends. When the user has not issued the instruction to end the search (NO in step S308), the processing proceeds to step S310. Step S309 is the end point of the processing, and when the processing reaches here, all processing performed by the searching device are terminated.

In step S310, it is determined whether the user issues an instruction to move in the 3D search space by an operation via the input device 104 illustrated in Fig. 1. The search result generation unit 210 illustrated in Fig. 2 performs the determination. When the user issues the moving instruction by the operation via the input device 104 illustrated in Fig. 1 (YES in step S310), the processing proceeds to step S311. When the user has not issued the moving instruction (NO in step S310), the processing proceeds to step S312.

In step S311, since the user has issued the moving instruction, according thereto, a viewpoint in the 3D search result space is moved and the position thereof is acquired. According to the acquired viewpoint, the processing proceeds to step S307 to update the display of the 3D search result space. This processing is performed by the search result generation unit 210 illustrated in Fig. 2. With this arrangement, the user can easily grasp the contents by getting closer to the clusters and the search result candidates. Further, the user can also grasp the entire contents by getting far away and arranging the other clusters and search result candidates. Furthermore, the user can come around to observe the clusters and the search result candidates at another angle for a better view. As described above, according to the present exemplary embodiment, when many search result candidates are acquired, the user can move in the 3D search space to understand and grasp the contents and the entire figure.

In step S312, it is determined whether the user issues an instruction to add the keyword or to add the keyword that has not been used for the search instruction to the search instruction by the operation via the input device 104 illustrated in Fig. 1. This processing is performed by the search result generation unit 210 illustrated in Fig. 2. When the user has issued the instruction by the operation via the input device 104 illustrated in Fig. 1 (YES in step S312), the processing proceeds to step S313. When the user has not issued the instruction (NO in step S312), the processing proceeds to step S314.

In step S313, the keyword instructed in step S312 is added to the search instruction. Accordingly, the contents of the keyword list are changed. More specifically, when a new keyword is added, a keyword ID is newly added to the keyword, and is set to a state in use as the search instruction. Further, if the instruction is to add the keyword that has not been used for the search instruction to the search instruction, a search instruction state of the corresponding keyword is changed to "use". Then, the processing proceeds to step S314 and the processing is again performed from the search processing and the display contents in the 3D search result space is updated.

In step S314, it is determined whether the user issues an instruction to input the keyword into the 3D search result space, to move the input keyword, and to set the keyword by the operation via the input device 104 illustrated in Fig. 1. When the user has issued the instruction to input and move the keyword by the operation via the input device 104 illustrated in Fig. 1 (YES in step S314), the processing proceeds to step S315. When the user has not issued the instruction to input and move the keyword (NO in step S314), the processing proceeds to step S308, and the processing for the next instruction is continued. In step S315, for the keyword which the user has operated via the input device 104 illustrated in Fig. 1, the position thereof in the 3D search result space is acquired. Then, the processing proceeds to step S316.

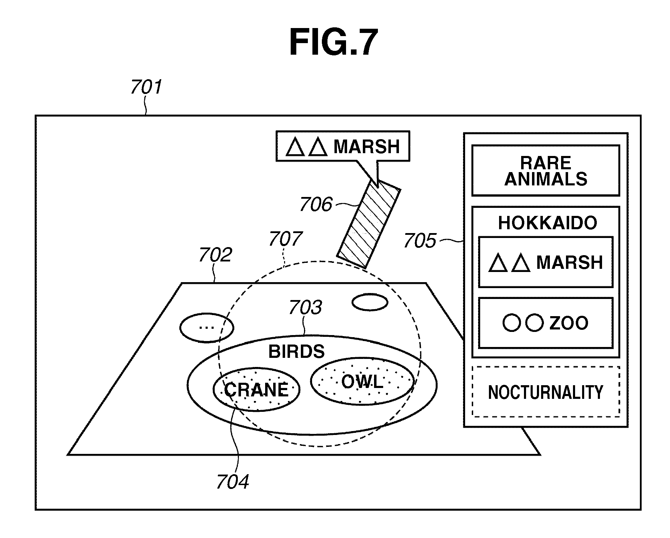

In step S316, when a selection candidate is available to the keyword which the user has operated via the input device 104 illustrated in Fig. 1, the selection candidate can be acquired. Subsequently, the processing proceeds to step S306, where the calculation is performed for acquiring the positions of each cluster and each search result candidate so that the keywords can be displayed as they are set in the 3D search space. The keywords are set in the 3D space in step S307, and then the display is changed. The display contents and the operations when the keywords are set in the 3D search result space are collectively described below with reference to Figs. 7, 8, and 9.

Fig. 7 illustrates an example of a display immediately after the keywords are set in the 3D search result space. In Fig. 7, items 701 to 705 respectively correspond the items 601 to 605 illustrated in Fig. 6, thus the description thereof will not be repeated. The display contents illustrated in Fig. 7 are calculated and displayed according to the processing in steps S305 to S307 illustrated in Fig. 3.

A keyword 706 is set in the 3D search result space and expressed to have an attraction force as a magnet. Here, when the keyword is selected from the keyword list 705, the magnet of the selected keyword is displayed. Such expression is a metaphor of the keyword, and it is desirable to use the metaphor that makes the user imagine that the keyword has the attraction force. Any expressions can be used as the metaphors of the keywords, and herein the magnet that can easily express to have the attraction force is used as the metaphor and referred to as a magnet metaphor. A magnet metaphor 707 is created from the keyword of "ΔΔ marsh". Actually, as illustrated in the examples in Figs. 4B and 5A, each cluster and search result candidate includes the similarity relative to each keyword. Therefore, the magnet metaphor has the strong attraction force to the keyword having the high similarity as an association with the keyword.

It is assumed that the attraction force that is proportional to the square of the distance, as indicated by the equation of the magnetic attraction of Maxwell's equations, is applied to the search result from the position where the search result is originally arranged, and all search results and clusters have the attraction force. On the other hand, although the magnet metaphor similarly has the attraction force, it is characterized in that the magnet metaphor reacts only to the keyword thereof. Thus, the similarity between the keyword of the magnet metaphor and the keyword (cluster name for the cluster) of the metadata of each search result is calculated, and then, using the similarity as a basic value, as the above-described magnet of Maxwell's equations, the attraction force is calculated by changing the similarity proportional to the square of the distance. According to the calculation, each search result and cluster move to positions where the two attraction forces are well balanced, and then a movement when the magnet metaphor is used can be calculated.

Further, regarding the cluster having come close to the magnet metaphor more than a predetermined distance, the attraction force is individually calculated for the cluster and the search result candidates therein. With this arrangement, in the cluster having come close to the magnet metaphor, the search result candidate having the change in shape and the very strong attraction force from the magnet metaphor moves close to an outside of the cluster.

This calculation method provides the magnet metaphor with the attraction force. As long as the calculation method can be used to perform the display and the operation of the present invention, any calculation method can be applied to the present invention.

However, if the keyword simply has the attraction force on the entire clusters and search result candidates to change the setting positions, only the setting position relative to the entire search result candidates is changed, and thus a result has no significant difference in the case where a simple addition of the search instruction is operated. According to the present exemplary embodiment, as illustrated in Fig. 6, the search result candidates are classified and arranged at a certain level in the shape of cluster. Thus, the particular and a plurality of clusters and search result candidates that are collected in the arrangement are selected, and the attraction force of the magnet metaphor is applied only on the selected targets. Accordingly, an operation for selecting the targets is provided.

A display 707 indicates a selection target area in which the target to be attracted by the magnet metaphor is selected. If the clusters and search result candidates are included within the selection target area, a change of the state of the clusters and search result candidates is expressed. More specifically, Fig. 7 illustrates that, since the "cranes" sub-cluster 704 is included within the selection target area 707, a color of the "cranes" sub-cluster 704 is changed to a highlight display.

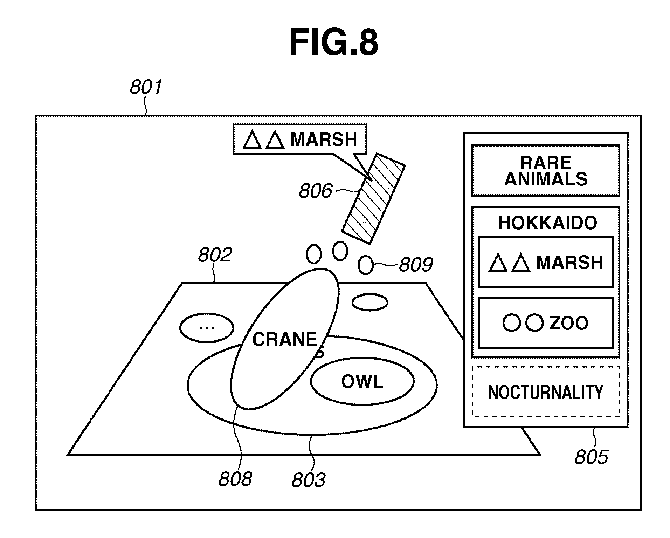

Fig. 8 illustrates a display after the attraction force of the magnet metaphor has started to be applied after the selection operation illustrated in Fig. 7 has been performed. In Fig. 8, items 801 to 803, 805, and 806 respectively correspond the items 701 to 703, 705 and 706 illustrated in Fig. 7, thus the description thereof will not be repeated. The display contents illustrated in Fig. 8 are calculated and displayed according to the processing in steps S305 to S307 illustrated in Fig. 3.

Since the attraction force of the magnet metaphor 806 is applied on the "cranes" sub-cluster 704, the arrangement of a "cranes" sub-cluster 808 and sub-clusters and search result candidates 809 is changed. Since the "cranes" sub-cluster 808 is not strongly attracted to the magnet metaphor 806, a form of the "cranes" sub-cluster is still maintained. On the other hand, the sub-clusters and search result candidates 809 are originally included in the "cranes" sub-cluster 704, and the "cranes" sub-cluster 808 is strongly attracted to the magnet metaphor 806, the sub-clusters and search result candidates 809 are drawn from the "cranes" sub-cluster 704.

At a base portion of the magnet metaphor, the clusters and search result candidates having the high similarity relative to the keywords are collected. Thus, to make the contents to be easily observed, unlike the normal magnet, the clusters and search result candidates are collected in a spindle-shape such that a base portion of the magnet metaphor becomes thick. By collecting the clusters and search result candidates in this manner, the contents of the search result candidates and the (sub) clusters that are located at the base portion of the magnet metaphor can be easily grasped. In this case, since the user may want to know the search results at the lower base portion of the magnet metaphor, it is preferable to arrange the search results not to overlap with each other and to perform the highlight display.

On the other hand, at a farther position from the magnet metaphor, the search result candidates and the (sub) clusters may be relatively overlapped with each other, and the expression thereof may be simplified to some extent. Further, the search result candidates and the (sub) clusters are arranged with the closer viewpoint to view the base portion of the magnetic metaphor more clearly, so that the contents can be easily grasped individually or while being compared with each other. The arrangement of the search results and a shape of the arrangement may be changed according to an operation speed and a moving distance when the magnet metaphor is operated. For example, the arrangement of the search results and the shape of the arrangement may be changed according to a case where the magnet metaphor is slowly moved and a case where the magnet metaphor is moved at high speed, or whether a moving distance is long or short (particularly at the base portion of the magnet metaphor).

With this arrangement, methods can be used for adjusting how high similarity of the search result is subjected to the movement, on the other hand, how low similarity of the search result is not subjected to the movement, or how close to the search result the position of the viewpoint after the movement is located. By adding such processing, versatility can be given to the operation method of the magnet metaphor, and according to the versatility, how to show the search results can be changed. The method described above is effective for the user when operating and attempting the valid magnet metaphor. Additionally, regarding how much the results that can be viewed by the operation of the magnet metaphor can be expressed, this method can decrease the processing.

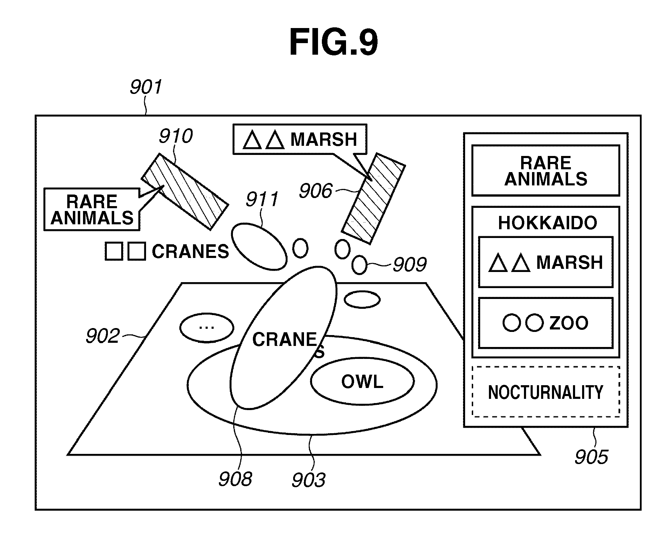

Fig. 9 illustrates a display when another magnet metaphor is to be continuously set to the result acquired from Fig. 8. In Fig. 9, items 901 to 903, 905, 906, 908, and 909 respectively correspond the items 801 to 803, 805, 806, 808, and 809 illustrated in Fig. 8, thus the description thereof will not be repeated. The display contents illustrated in Fig. 9 are calculated and displayed according to the processing in steps S305 to S307 illustrated in Fig. 3.

Fig. 9 illustrates a result in which the magnet metaphor 906 is set, and the selection operation as illustrated in Fig. 7 is performed on portions collected at the base portion of the magnet metaphor 906, and further as illustrated in Fig. 8, the attraction force of a magnet metaphor 910 of the keyword of "rare animals" is applied on the collected portions.

The calculation is started using a position of each search result candidate up to which the magnet metaphor 1 is applied as an original position. In other words, at the time when the magnet metaphor 1 is applied, the position after the search result has been moved by the attraction forces from both of the original position of the search result and the keyword of the magnet metaphor 1 is defined as the original position before the magnet metaphor 2 is applied. This calculation is the same as that described above when the magnet metaphor is applied. The movement by the magnet metaphor 2 is calculated such that an effect of the magnet metaphor 1 is reflected only to the calculation of the original position. Thus, the attraction force from the original position is applied, and this attraction force is the same as that from the position of the search result candidate described above. However, there is only one difference in which the position is that of the result of the first search result candidate and the magnet metaphor 1. Further, the attraction force of the magnet metaphor 2 is applied to the position. This is the same as when the above-described magnet metaphor is used. Accordingly, a " 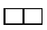 cranes" sub-sub-cluster or search result candidate 911 is retrieved as a result of the strong attraction by the magnet metaphor 910.

By performing the operation as illustrated in Fig. 9, a different magnet metaphor can be applied to all of or a part of the results that has been acquired by applying the magnet metaphor to a part of the search results. In such an operation, when a first magnet metaphor (defined as a magnet metaphor 1) is applied, the search results having the high similarity relative to the magnet metaphor 1 can be acquired. By applying the next magnet (defined as a magnet metaphor 2), the search results having the high similarity relative to the magnet metaphor 2 can be acquired from among the search results having the high similarity relative to the magnet metaphor 1.

The search results that are finally remained after the attraction are not a simple product set of the search results using the magnet metaphor 1 and the magnet metaphor 2, and are in a state that the priority is given to the similarity of the magnet metaphor 2. More specifically, according to an application order of the (different) magnet metaphors, the search results finally remained after the attraction and the setting thereof are changed. This is because the display control apparatus according to the present exemplary embodiment has a function for providing a unit that can rapidly narrows the necessary search results by appropriately selecting the application order of the magnet metaphors, unlike a case where a sum of sets and the product set of the search results are acquired by simply adding the search instruction such as the keyword to the entire search results.

Needless to say, more magnet metaphors may be used, and a plurality of different magnet metaphors maybe used for the search results on which the magnet metaphor has been once applied. As described above, the present invention can be preferably applied when the narrowing search is strongly performed using a plurality of magnet metaphors. Thus, as described above, the keyword to be the magnet metaphor can be freely added, and from which the magnet metaphor can be created. However, if a keyword whose search result has the low similarity is added, the magnet metaphor cannot be effectively used. Thus, it is rather effective that the re-search is performed by adding the keyword, and the search result is re-constructed.

A supplemental details about the display in step S307 will be described below.

In step S307, in addition to application of the magnet metaphor, which is the characteristic feature of the present invention, the basic display, particularly a movement of the search results in the space, and the operation and display for better viewing the search results can be performed. The processing described above will be described in detail.

Even in the state where the magnet metaphor is applied in Figs. 8 and 9, in the display in step S307, the viewpoint can be moved in the 3D search result space in steps S1110 and S1111, so that the user can freely view the search results. Further, an arrangement direction can be changed so that the user can easily view each search result from a viewpoint direction. When the display is performed from the viewpoint direction, display accuracy and an appearance in the display of the search results can be changed based on a distance from the viewpoint and the similarity of the search results. By using this method, a display processing speed can be improved.

Further, when the user focuses on the specific search result or cluster, display of the search results and clusters having lower importance can be blurred so as not to disturb the focusing target. Such display can be performed to emphasize a sense of distance in the space in the display of the 3D search result space, and help the user focus and concentrate on the search results that are located in front and draw attention from the user. Thus, the above-described processing is extra processing with respect to a display speed, however, performing such a display method within a range where the user does not particularly feel decrease in the processing speed is important for the user.

When the viewpoint is moved in the 3D search result space, to make a position and a route of the viewpoint to be viewed clearly, vertical and horizontal lines (grid) may be displayed on the floor 602 indicating the bottom of the space illustrated in Fig. 6, so that the user can easily understand the sense of distance in the 3D search result space. In addition to the grid, a color and luminance of the floor can be changed to acquire similar effects. The color, luminance, and pattern of a point at infinity to be a background of the space can be changed to acquire the similar effects. Moreover, a map display can be used in which the search results, clusters, and magnet metaphors can be looked down in the 3D space display. Any of these methods can be used for the present invention to help the user easily understand the display in the search space of the 3D space.

A specific cluster can be selected and its sub-cluster can be displayed. Such display can be realized by changing the display method to display the sub-cluster of the specific cluster when the viewpoint approaches the specific cluster in the display in step S307. When the cluster is displayed, its label (e.g., "cranes" in the example described above) is displayed. According to the movement of the viewpoint, the label is moved to a position where the user can easily view it, and the label is kept visible for the user.

To indicate an existence of the sub-cluster, the shadows of the cluster and the sub-cluster can be displayed on the floor 602 illustrated in Fig. 6. Alternatively, a frame of a specific shape indicating the existence of the sub-cluster in the cluster can be displayed. In the display of the sub-cluster, when the viewpoint approaches the cluster or the sub-cluster, the label is displayed. According to the movement of the viewpoint, the label is moved to a position where the user can easily view it, and the label is kept visible for the user.

To make the expressions of the cluster and sub-cluster easily understood, a method can be used for changing the display and the movement. Further, when the search result belongs to the same cluster or sub-cluster, the display and the movement can be changed so that which cluster or sub-cluster the search result belongs to can be classified. For example, regarding the color, luminance, and movement (e.g., movement of slightly up and down, right and left, and returning in the vicinity of the arranged position) of each search result, the same attribute is applied to the search results belonging to the same cluster or sub-cluster to give them the expressions and movements that can be easily identified.

In the case of the first display of the search results, the case of the display of when the cluster becomes its sub-cluster, or the case of the display of when the sub-cluster becomes its upper cluster, it can make the user strongly aware of the cluster or the sub-cluster to which the search results belong by displaying and moving the search results in the cluster or the sub-cluster while performing the movement, the specified operation, change in color and luminance in a unit of cluster or sub-cluster. When moving, the search results do not simply move to the target position in straight lines, but move redundantly in a sweeping form in a unit of cluster or sub-cluster to which the search results belong so that the same effect can be acquired.

Further, by selecting the specific search result and displaying it in expansion, the user can view the search result in detail. At this point, to understand a reason why it is remained as the search result, the user can view various metadata pieces such as the keyword that the search result has.

The magnet metaphor of the same keyword can be applied to the different search results and clusters. By canceling to apply the magnet metaphor that has been once applied, the attracted search result and cluster can return to the previous arrangement positions. A method for changing the display and the movement can be used to classify the search result on which the magnet metaphor of the keyword is applied from that on which the magnet metaphor of the keyword is not applied.

When a plurality of magnet metaphors are applied, a method for changing the display and the movement can be used to classify which magnet metaphor of the keyword is applied. For example, regarding the color, luminance, and movement (e.g., movement of slightly up and down, right and left, and returning in the vicinity of the arranged position) of each search result, the same attribute is used to the search results to which the magnet metaphor of the keyword is applied to give them the expressions and movements that can be easily identified. When this processing is performed, by performing the processing described above in the different pattern from that of the display, the operation, and the movement of the cluster or the sub-cluster, the user can be aware that the magnet metaphor of the keyword is applied to the content of the operation.

As described above, to the results of the search using the keyword that is particularly important among the keywords as the search instruction, the content is classified and displayed as the (sub) cluster that is the collection of the search result candidates. According to the relationship between the magnet metaphor and the content and using the magnet metaphor, the display is changed. Further, the (sub) clusters and search result candidates that are a part of the content are selected, and retrieval is performed by attracting with the magnet metaphor of the keyword from only the selected target.

With this processing, in the display of the search results using the multidimensional space, the display and operation are associated with the addition and change of the search instruction in the space, so that the user can easily grasp the content. Further, the narrowing search that is difficult with the normal search operation and deals with only a specific part of the search results can be realized. By using the magnet metaphor of the different keyword continuously, more effective narrowing search for the specific part of the search results can be realized.

In a second exemplary embodiment, an example will be described in which the expressions in the 3D space arrangement are further utilized regarding a document search or information search via the Internet. The example describes the case in which a search operation is performed and a large number of search results that is the results of the operation are displayed, based on the first exemplary embodiment.

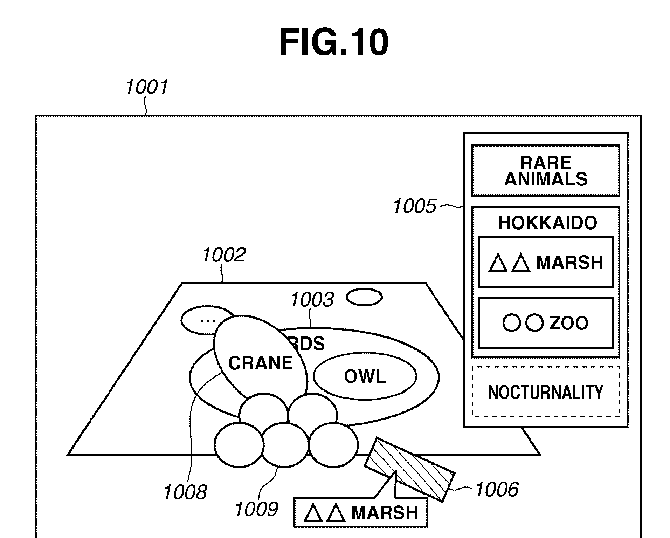

Fig. 10 illustrates a display after the attraction force of the magnet metaphor has started to be applied after the selection operation illustrated in Fig. 7 has been performed. In Fig. 10, items 1001 to 1009 respectively correspond to the items 801 to 809 in Fig. 8. However, when a magnet metaphor of the keyword 1006 is selected and the narrowing is started, the position of the magnet metaphor of the keyword 1006 is automatically moved toward a front direction viewed from the user, and then, along with the magnet metaphor of the keyword 1006, a search result 1009 is also moved toward the front direction viewed from the user. Further, the position of the viewpoint is moved simultaneously so that the user can view better the search results moving to the front.

With this arrangement, the moving search results come to a position that can be viewed better on a screen, and the search results are expanded and displayed. This is a method for presenting the narrowing search results that utilizes the presentation of the search results using the 3D space. With this method, the user can easily grasp the results of the narrowing search that uses the attraction forth of the magnet metaphor.

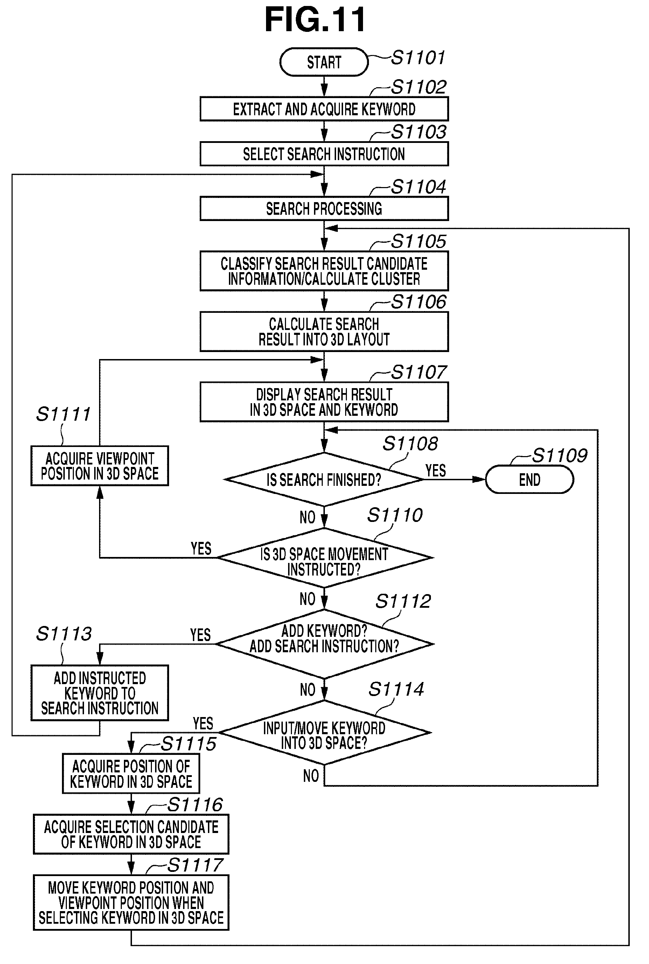

To perform such processing, it is necessary to add processing to the first exemplary embodiment. Fig. 11 illustrates the processing.

Since steps S1101 to S1116 illustrate in Fig. 11 are the similar to steps S301 to S316 illustrate in Fig. 3, the description thereof will not be repeated. Step S1117 is added. In step S1117, based on the information acquired in step S1116, when there is an operated keyword and the attraction force of the magnet metaphor 1006 is to be used, the position of the magnet metaphor of the keyword and the position of the viewpoint are moved.

The positions are corrected as illustrated in Fig. 10 to make a movement. Then in step S1106, the positions of each cluster and each search result candidate are calculated so that the magnet metaphor of the keyword is displayed as they are set in the 3D search result space. In step S1107, the search result space is displayed to realize the display of the present exemplary embodiment.

Further, in step S1117, the positions of the clusters and search result candidates to be arranged are determined in the order of the high similarity or to indicate differences in the similarity. With this arrangement, the search result space can be displayed in the form that is easy for the user to grasp how high the similarity of the clusters and the search result candidates are relative to the applied search instruction and how many thereof are included. At this point, the clusters and search result candidates having the low similarity are removed from the candidates to be aligned. Alternatively, the reference minimum similarity for determining the low similarity is previously determined, and the clusters and search result candidates having the similarity equal to or less than the reference minimum similarity are removed from the candidates to be aligned. The reference minimum similarity can be set or changed for each keyword of the magnet metaphor.

Similarly, for each keyword of the magnet metaphor, an intensity thereof may be set so that weight applied on each keyword can be changed according to the similarity, and the intensity may be included in the calculation of the similarity. With this arrangement, the similarity for each keyword can be weighed, and thus the alignment positions of the search results can be changed. When such processing is performed, the weight of the similarity of each keyword looks like strength of the attraction force of the magnet metaphor for the user, which provides easy expressions using a characteristic of the magnet.

Further, as similar to the first exemplary embodiment, the viewpoint can move in the 3D search result space in the present exemplary embodiment, so that the user can freely view the search results. The direction in which the search results are arranged can be changed so that each search result can be easily viewed from the viewpoint direction. When the display is performed from the viewpoint direction, display accuracy and an appearance in the display of the search results can be changed based on a distance from the viewpoint and the similarity of the search results. Further, when the user focuses on the specific search result or cluster, display of the search results and clusters having lower importance can be blurred so as not to disturb the focusing target. Such display is performed within a range where the user does not particularly feel decrease in the processing speed.

Further, in the processing performed in step S1117, the movement is not performed all at once but gradually performed to correct each position, and then the user can continuously confirm that the magnet metaphor 1006 of the keyword and the search result 1009 gradually move to the front viewed from the user. Furthermore, the search result moves in order from that having the magnet metaphor of the keyword having the high similarity, and the search results within each setting unit moves in order. When the search results are moved, the color, the luminance, the action and route in the movement can be changed according to the similarity, so that how large the difference between the similarity can be expressed to the user in addition to a simple order of the similarity.

When the similarity of the search result changes greatly, the color, the luminance, the action and route in the movement may be set to greatly change so that the difference between the changes of the similarity can be expressed to the user. Similarly, using the color and the luminance of the background, the floor, and the space in the vicinity of the search result, a state when the magnet metaphor of the keyword is applied and a state indicating which magnet metaphor of the keyword is applied can be expressed. Further, by changing the above-described states along with the movements of the search result, the change when the magnet metaphor of the keyword is applied expresses the search result having how large similarity is moved or how much movement is generated in total. In other words, how many search results can be acquired can be expressed. Furthermore, there is a method for expressing differences using sound effects corresponding to the differences of the above-described colors and the luminance.

By performing these methods, the display content becomes easier for the user to understand. In order to draw the user's attention to the search results which have the high similarity and are located in front, the movements thereof are indicated in continuous and outstanding curvilinear action and preferentially performed. The display accuracy of the content is also kept high. On the other hand, regarding the search results having the low similarity, in order to decrease the display processing load, combination of the simple movements in straight line is performed, and the display accuracy of the movement is also lowered.

As described above, to the results of the search using the keyword that is particularly important among the keywords as the search instruction, the content is classified and displayed as the (sub) cluster that is the collection of the search result candidates. According to the relationship between the magnet metaphor and the content and using the magnet metaphor, the display is changed. Further, the (sub) clusters and search result candidates that are a part of the content are selected, and retrieval is performed by attracting with the magnet metaphor of the keyword from only the selected target.

With this processing, in the display of the search results using the multidimensional space, the display and operation are associated with the addition and change of the search instruction in the space, so that the user can easily grasp the content. Further, the narrowing search that is difficult with the normal search operation and deals with only a specific part of the search results can be realized. By using the magnet metaphor of the different keyword continuously, more effective narrowing search for the specific part of the search results can be realized. Thus, the user can easily grasp the results of the narrowing search.

In a third exemplary embodiment, an example will be described in which the search efficiency in the 3D space arrangement are further utilized regarding a document search or information search via the Internet. The example describes the case in which a search operation is performed and a large number of search results that is the results of the operation are displayed, based on the first exemplary embodiment.

As subjects for mainly performing the processing of the first exemplary embodiment, the CPU 101 and the GPU 108 illustrated in Fig. 1 are included. The display in the 3D space is performed by the GPU 108. When the display content and the positions of each search result and its cluster, and the display content and the positions of the magnet metaphors of the keywords are given, the GPU 108 mainly performs the calculation to create the display content and the display device 109 displays the display content.

The above-described state includes a renderer in the 3D space centered on the GPU 108. Actually, the processing performed in step S307 illustrated in Fig. 3 corresponds to the renderer, and the processing performed in steps S311 and S315 acquires the positions from the renderer in the 3D space. Further, the display of the movement in the 3D space is updated on the display device 109 only by notifying the 3D renderer thereof according to the user's operation.

When the renderer in the 3D space can manage input, the 3D renderer can detect the selection of the search result, the cluster, and the magnet metaphor of the keyword. As described above, each processing of the first exemplary embodiment illustrated in Fig. 3 is appropriately divided so that the processing load can be distributed and the processing can be performed more efficiently.

Thus, according to the third exemplary embodiment, the processing is further distributed. In a case of a device that performs a display in the 3D space, the device may often handle physical phenomena such as a gravitational effect and movements of objects caused by an applied force on the content expressed in the 3D space. Thus, a physical calculation engine that is mainly specialized for such physical calculation may be used. The physical calculation engine may be arranged in the CPU 101 or in the GPU 108, or independently connected to the bus 105 as illustrated in Fig. 1.

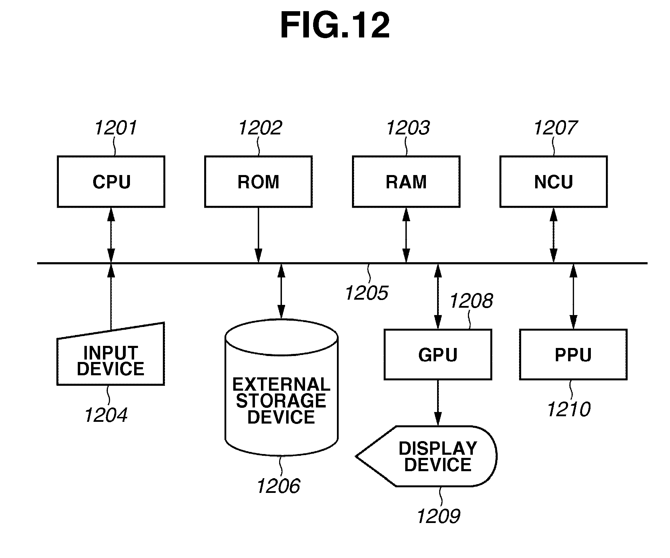

According to the present invention, any of the above-described arrangement can be used. Further, when the CPU 101 and the GPU 108 are appropriately used for the physical operation, even without the physical calculation engine, the effect of the present invention can be realized. According to the present exemplary embodiment, it is assumed that the physical calculation engine is arranged in the independent bus for facilitating the understanding. Fig. 12 illustrates a hardware configuration of the search device according to the present exemplary embodiment. In Fig. 12, components 1202 to 1209 respectively correspond to the components 101 to 109 in Fig. 1, thus the description thereof will not be repeated. A physical calculation engine physics processing unit (PPU) 1210 performs the calculation mainly specialized in physical calculations as described above.

In such a case, the calculation of the position of the search result and the cluster according to the present exemplary embodiment is expressed by replacing with the physical calculation such as the Maxwell's equation regarding the motion and magnetic force of the physical phenomenon, so that the GPU 1208 and the PPU 1210 can perform the display in the 3D space. At this point, in the phenomenon of the search result in the display space, the physical calculation that is different from the world of our normal life may be performed. The phenomenon in the virtual physical space can be handled by previously replacing with the above-described equation of motion or the Maxwell's equation and applying them to the PPU 1210.

Similarly, to the operation using the magnet metaphor, a form of an equation of a space modification such as the general theory of relativity, or an equation of a space modification in the virtual space with reference to the general theory of relativity may be given. With this arrangement, the processing can be further distributed, and the search and its result can be allocated to the CPU 101 illustrated in Fig. 1, the position calculation of the search result and the cluster can be allocated to the PPU 1210, and the calculation of the display content in the 3D space can be allocated to the GPU 108.

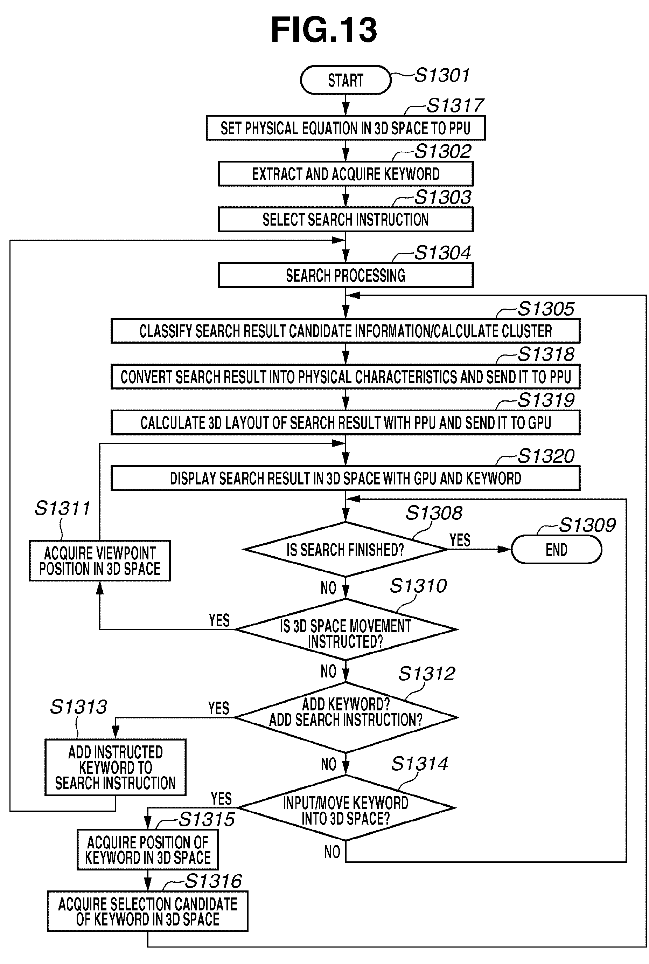

Fig. 13 illustrates a flow of the processing when such distribution processing is performed. In Fig. 13, steps S1301 to S1305, and steps S1308 to S1316 illustrated in Fig. 13 are similar to steps S301 to S305, and steps S308 to S316 illustrated in Fig. 3 respectively, thus the description thereof will not be repeated.

In step S1317, the physical equation in the 3D space to be used to display the search result by the CPU 1201 illustrated in Fig. 12 is previously set by in the PPU 1210 illustrated in Fig. 12 . As described above, the physical equation set herein may be acquired from the virtual space or the physical equation different from the world of our normal life. Actually, since the arrangement is calculated based on the similarity of the search result, the physical equation can be used when the similarity is converted into a value of the physical characteristic and used for the calculation. For example, to the arrangement of the search result in the cluster, the attraction force based on the similarity centered on the cluster, the attraction force and repulsive force from the point at infinity, the attraction force and the repulsive force between the search results and the clusters, and the equation of motion when the search result is physically moving are given.

In step S1318, based on the result of the classification and the cluster calculation of the search result candidate information that are calculated in step S1305 by the CPU 1201 illustrated in Fig. 12, the characteristic of each search result and cluster (e.g., a center position, a radius, a content generating attraction force) and information about the keyword are converted into the physical characteristics to calculate with the physical equation applied in step S1317. The physical characteristics are transmitted to the PPU 1210, and then the PPU 1210 can calculate, together with the physical equation given in step S1317, the position of each search result.

In step S1319, the PPU 1210 illustrated in Fig. 12 performs the physical calculation for the physical equation acquired in step S1317 by applying the physical characteristic values of each search result and the keyword given in step S1318, so that the information about the position where each search result is arranged can be calculated. Then the position information is transmitted to the GPU 1208. With this arrangement, the GPU 1208 can create the display content. In step S1320, based on the position information given in step S1318, the GPU 1208 illustrated in Fig. 12 creates the display of the search result and the magnet metaphor of the keyword in the 3D space, and then the display device 1209 displays them to the user.

According to the present exemplary embodiment, the PPU 1210 illustrated in Fig. 12 is used. Since the physical calculation is generally used for a science technique operation and also used for a great amount of calculation targets (data) (e.g., physical simulation), a mechanism in which the calculation can be performed at high speed or a part thereof may be stored in the CPU 1201. Software that can draw the high speed-calculation characteristics may be prepared. Further, the software of a game often calculates the arrangement, contact, and collision of the objects in the 3D space.

Therefore, the GPU 1208 often store the mechanism or a part thereof that has a relatively low accuracy not enough for the science technique operation but can efficiently calculate a great amount of physical operations in a range which does not cause the user to feel a sense of difference for performing the display in the 3D space. The software that can provide the high speed calculation characteristic utilizing the GPU 1208 is prepared to be used from the CPU 1201.

Thus, in this case, the calculation of the arrangement positions of each of the search result, the cluster, and the magnet metaphor can be expressed in a form of the physical calculation. Only using the software that can provide the high speed calculation characteristic described above, improvement of the processing speed can be expected.

Further, in the arrangement of each search result by applying the magnet metaphor, each search result includes the value of the similarity relative to the magnet metaphor. Thus, when the search result is applied to the arrangement in the space, the calculation that is actually different from the physical phenomenon needs to be performed. With this calculation, the acquired search result can realize the arrangement that can be better viewed by the user.

The calculation in such a case can be replaced with not only the physical calculation like the simple attraction force but also the physical calculation (e.g., calculation in a gravitational field in the general theory of relativity) that can distort the space in which the search result is arranged. With this calculation, all calculations when the magnet metaphor is applied can be replaced with the physical calculations. With this processing, the efficiency of the processing with using the software and the PPU 1210 that can provide the high speed calculation characteristics described above can be improved, so that the improvement of the processing speed can also be expected.

As described in the first, second and third exemplary embodiments, to the results of the search using the keyword that is particularly important among the keywords as the search instruction, the content is classified and displayed as the (sub) cluster that is the collection of the search result candidates. According to the relationship between the magnet metaphor and the content and using the magnet metaphor, the display is changed. Further, the (sub) clusters and search result candidates that are a part of the content are selected, and retrieval is performed by attracting with the magnet metaphor of the keyword from only the selected target.

With this processing, in the display of the search results using the multidimensional space, the display and operation are associated with the addition and change of the search instruction in the space, so that the user can easily grasp the content. Further, the narrowing search that is difficult with the normal search operation and deals with only a specific part of the search results can be realized. By using the magnet metaphor of the different keyword continuously, more effective narrowing search for the specific part of the search results can be realized. Furthermore, the above-described narrowing search can be realized by distributing the processing for displaying the search result.

As long as the display is performed in a multidimensional manner, the present invention can be applied to any dimensional display. However, when the 3D display is used, the higher effects can be expected. Further, the configuration of the present invention is not limited to that illustrated in Fig. 1. As long as the basic configuration contents are similar, it can be applied to the present invention. The search target of the present invention may be a document, an image, a moving image, sound, and whatsoever. As long as the characteristic data (metadata) which is the target to be searched is included, any target may be used, and any method for extracting and searching the metadata may be used. The search method may previously create search indexing or may extract and compare the metadata when searching.

The present invention can be applied to a configuration which is activated or called by other devices or units, or which can automatically start the search by receiving information about the content to be searched first in cooperation with those functions. Similarly, the results searched by the present invention or a part thereof, and particularly the search result selected by the user can be provided to other devices or units and used in cooperation with those functions. Further, the present invention may be realized in the combination of a plurality of devices. Particularly, the present invention can be realized in a plurality of devices that are connected using a computer network. A configuration in which a device mainly performs the calculation is located on the Internet and a device using the network of the Internet mainly performs the display and input is conceivable.

The present invention may be applied to a system including a plurality of devices (such as a host computer, an interface device, a reader, and a printer). Further, the present invention may be applied to an apparatus including a single device (such as a copy machine, a fax machine, a camera, a video camcorder, and a television).

The present invention can be realized by applications described below. More specifically, a recording medium (or storage medium) that stores a program code (a computer program) of software that realizes functions of the exemplary embodiments described above is supplied to a system or an apparatus. The storage medium described above is a computer readable storage medium. The computer (CPU or a micro processing unit (MPU)) of the system or the apparatus reads and executes the program code stored in the recording medium. In this case, the program code itself read from the recording medium realizes the functions of the exemplary embodiments described above, and thus, the recording medium that records the program code constitutes the present invention.

Further, by executing the program code read by the computer, an operating system (OS) running on the computer performs all of or a part of actual processing based on an instruction of the program code. By the processing, a case where the functions of the exemplary embodiments described above is realized is also included in the present invention.

Furthermore, the program code read from the recording medium is written into a memory provided to a function expansion card inserted into the computer or provided to a function expansion unit connected the computer. Then, based on the instruction of the program code, the CPU included in the function expansion card or the function expansion unit performs a part of or all of the actual processing, and then the processing realizes the functions of the exemplary embodiments described above. That case is also included in the present invention.

When the present invention is applied to the above-described recording medium, the recording medium stores the program codes corresponding to the above-described flowcharts.

An embodiment of the present invention can provide a method of displaying the results of a search in a set of data comprising: a) receiving one or more search terms; b) performing a search on the set of data using the one or more received search terms to generate a set of search results; c) performing a cluster analysis on the search results in order to generate a plurality of clusters of search results and generating distance metrics which defines a relationship between the search results and their respective clusters; d) generating a two or three dimensional display showing the clusters and separating the search results within the clusters according to the calculated distance metrics; and characterized by e) introducing an icon representing a keyword as an attractor into the two or three dimensional space; and f) distorting the arrangement of the search results within the clusters in order to show similarities between the search results and the keyword so that search results more closely related to the keyword are more strongly attracted to the icon.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A display control apparatus comprising:
display control means configured to arrange a plurality of contents (703, 704), each of which includes a keyword, in a virtual space and to display the contents on a display screen;
setting means configured to set one key (706) on the display screen;
selection means configured to select a content to be a search target (707) from among the plurality of contents based on a position at which the key is set by the setting means;
search means (202) configured to perform a search on the search target selected by the selection means with the set key; and
display change means configured to change an arrangement of the content searched by the search means (202) and display the content based on a relationship with the key set by the setting means.

2. A display control apparatus according to claim 1, wherein the display change means is configured to arrange and display the content such that a distance between the set key (706) and the searched content corresponds to a similarity between a keyword included by the content and the set key.

3. A display control apparatus according to claim 2, wherein the display change means is configured to display more visible the content whose distance to the set key is shorter.

4. A display control apparatus according to any preceding claim, wherein the display control means is configured to classify and display the plurality of contents according to the keyword.

5. A display control apparatus according to any preceding claim, wherein the display control means is configured to classify the plurality of contents according to the keyword and display the content by clustering.

6. A display control apparatus according to claim 4, wherein the display change means is configured to perform a narrowing search on the content corresponding to classification in accordance with a position of the key (706) using the key.

7. A display control apparatus according to claim 2, wherein the display change means is configured to display the contents searched by the search performed by the search means (202) using the key having an attraction force.

8. A display control apparatus according to claim 4, wherein the display change means is configured to highlight and display a region corresponding to the classification in accordance with a position of the key.

9. A display control apparatus according to any preceding claim, wherein the display change means is configured to perform display while moving a viewpoint of the plurality of contents displayed on the display screen.

10. A display control apparatus according to claim 2,
wherein the setting means is configured to further set another key (910) which is different from the set key (906), and
wherein the display change means is configured to perform the search on a result of the search based on the another key.

11. A display control apparatus according to any preceding claim, wherein the display control means is configured to display keywords included in the plurality of contents in a list.

12. A display control apparatus according to any preceding claim,
wherein the display control means is configured to arrange and display the plurality of contents in a sphere shape, and
wherein the display change means is configured to, if the plurality of contents is changed in the arrangement based on the key and displayed, arrange and display the plurality of contents in a spindle shape (808).

13. A display control apparatus comprising:
display control means configured to arrange a plurality of contents (703, 704), each of which includes a keyword, in a virtual space and to display the contents on a display screen (109);
setting means configured to set one key (706) on the display screen; and
display change means configured to, based on a relationship between the key (706) set by the setting means and the plurality of contents (703, 704), change an arrangement of the plurality of contents so that the content is attracted by the key and display the contents.

14. A method for controlling a display control apparatus, the method comprising:
causing display means to arrange (S306) a plurality of contents each of which includes a keyword in a virtual space and to display (S307) the contents on a display screen;
causing setting means to set one key (706) on the display screen;
selecting a content to be a search target from among the plurality of contents based on a position at which the key is set;
performing a search on the selected target with the set key; and
changing display of the contents searched by the search by changing an arrangement of the plurality of contents based on a relationship between the set key and the plurality of contents.

15. A method for controlling a display control apparatus, the method comprising:
arranging (S306) a plurality of contents each of which includes a keyword in a virtual space and displaying the contents on a display screen (109);
setting one key (706) on the display screen (109); and
changing, based on a relationship between the set key and the plurality of types of content, an arrangement of the plurality of contents so that the content is attracted by the key and displaying the contents.

16. A program which, when executed by a computer, causes the computer to carry out the method of claim 15.

17. A storage medium storing the program according to claim 16.
